# EUROPEAN PATENT SPECIFICATION

(11) **EP 2 101 442 B1**
(45) Date of publication and mention of the grant of the patent: **16.03.2011**
(21) Application number: 07846164.7
(22) Date of filing: 26.12.2007
(51) Int. Cl.: H04L 12/14, H04M 15/00, H04M 17/00, G06Q 20/00

(54) **CHARGING PROCESSING METHOD, SERVICE NETWORK ELEMENT AND CHARGING SYSTEM THEREOF**
VERGEBÜHRUNGSVERARBEITUNGSVERFAHREN, SERVICENETZWERKELEMENT UND ZUGEHÖRIGES VERGEBÜHRUNGSSYSTEM
PROCÉDÉ DE TRAITEMENT DE FACTURATION, ÉLÉMENT DE RÉSEAU DE SERVICES ET SYSTÈME DE FACTURATION

(30) Priority: 22.01.2007 CN 200710000385; 30.01.2007 CN 200710007516
(43) Date of publication of application: 16.09.2009
(73) Proprietor: Huawei Technologies Co., Ltd., Longgang District, Shenzhen Guangdong 518129 (CN)
(72) Inventor: CAO, Jinwu, Shenzhen, Guangdong 518129 (CN); LIU, Xiujuan, Shenzhen, Guangdong 518129 (CN); DING, Jianjun, Shenzhen, Guangdong 518129 (CN); SHI, Chao, Shenzhen, Guangdong 518129 (CN); YU, Guanghu, Shenzhen, Guangdong 518129 (CN); WANG, Sheng, Shenzhen, Guangdong 518129 (CN); YE, Jing, Shenzhen, Guangdong 518129 (CN)
(74) Representative: Körber, Martin Hans
(86) International application number: PCT/CN2007/071338
(87) International publication number: WO 2008/089644

(56) References cited:
- WO-A1-2004/036871
- WO-A1-2005/122469
- WO-A2-01/58110
- CN-A- 1 340 956
- CN-A- 1 463 115
- CN-A- 1 553 686
- CN-A- 1 553 721
- CN-A- 1 642 210
- CN-A- 1 859 136
- CN-A- 1 859 136
- CN-A- 101 001 277
- CN-A- 101 005 384

## Description

### FIELD OF THE INVENTION

The present invention relates to a charging technology for communication systems, and more particularly, to a charging processing method, a service network element (NE) and a charging system.

### BACKGROUND

Currently, telecommunication operators mainly provide the customers with two payment methods, that is, prepayment and post-payment.

In the case of prepayment, a user needs to save a certain amount of money to his/her prepay account as prepaid expenses. In the case of prepayment, an Online Charging System (OCS) is generally used to charge for services used by a prepaid user and debit in real-time the charge for the services used by the user against the prepay account. If the user does not have enough balance in the prepay account, then he may continue to use the service only after recharging the account.

In the case of post-payment, a user may use a service first, and is charged for the services used in a period of time then. In the case of post-payment, an Offline Charging System (OFCS) is generally used to charge for the services used by the user. The OFCS performs rating according to call records generated by service network elements and outputs bills periodically. The user makes payment for the corresponding service charge according to the bills. The service NE may be a switch, a value added service (VAS) platform such as a Short Message Service Center (SMSC), or a Short Message Gateway (SMG).

The services may include calling service and VASs. The VASs are services other than the call service provided by the operators, such as Short Message Service, Internet service and streaming media service.

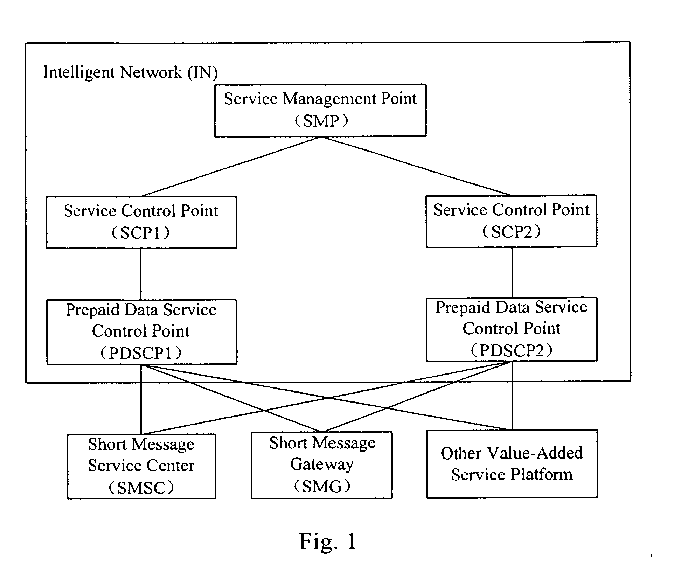

Nowadays, for the VASs, the operators generally perform charging on the VASs used by the user by employing network architecture as shown in Fig. 1. The OCS of Fig. 1 is implemented with an Intelligent Network (IN). An IN mainly includes a Prepayment Data Service Control Point (PDSCP), a Service Control Point (SCP) and a Service Management Point (SMP). When a user uses a VAS, the VAS platform distinguishes a prepaid user from a post-paid user according to the number segments which they belong to. After that, for the prepaid user, the VAS platform transmits an authentication request message to the IN, and a home PDSCP and SCP corresponding to the user in the IN performs authentication/debiting on the prepaid user and transmits an authentication request response message to the VAS platform. If the authentication/debiting is successful, the VAS platform permits the prepaid user to use the VAS. If the authentication/debiting is not successful, the VAS platform prohibits the user from using the VAS. For a post-paid user, the VAS platform informs the user of the VASs used by the user through call records, and the user makes the payment according to the call records in a specified period. Currently, the SMSC and SMG shown in Fig. 1 are the widely-used VAS platforms.

Generally, the prepaid users and post-paid users are distinguished from each other according to segments of mobile numbers allocated to the users by the operators. For example, for China Mobile, all the mobile numbers within the number segment of 139xxxxxxxx correspond to post-paid users, while all the mobile numbers within the number segment of 138xxxxxxxx or 135xxxxxxxx correspond to prepaid users. Thus, the charging system of the operators may distinguish the prepaid users from the post-paid users easily according to the number segments which the users belong to, and then control service usage of the users according to the corresponding processing.

To accommodate the requirement change of the users, the operators allow a user to change the payment method without changing the mobile number. After the payment method is changed, the operators may perform corresponding debiting on the call service used by the user, according to the changed payment method. However, the operators currently do not provide sufficient support for the VASs.

Specifically, after a prepaid user is changed to a post-paid user, when the post-paid user requests to use VASs, the VAS platform determines that the user is still a prepaid user according to the number segment which the user belongs to, and informs the original home PDSCP corresponding to the user in the IN platform to perform authentication/debiting on the user. However, data of the user on the home PDSCP in the IN are deleted after the user changes its payment method. As a result, the home PDSCP transmits an 'authentication failed' response message to the VAS platform. The VAS platform in turn prohibits the user from using the VASs, according to the received 'authentication failed' response message. This will cause inconvenience to the user.

After a post-paid user is changed to a prepaid user, when the prepaid user requests to use VASs, the VAS platform determines that the user is still a post-paid user according to the number segment which the user belongs to, and allows the user to use the VAS without debiting the prepaid user first. The VAS platform then informs the user to make the payment through call records. However, the incomplete protocol previously made by the operators may make it possible that the VAS platform can not generate the call records in such a scenario, or the prepaid user may overdraw. In this case, the user may not pay for the VASs used, which causes losses to the operators.

A user who changes his payment method without changing his mobile number may be referred to as a random user. Measures are taken in the prior art to properly charge for the services used by a random user in order to avoid charging error. The correspondence between subscriber number segments and payment methods is synchronized mainly in the service NE and the OFCS in the prior art. The service NE and OFCS perform the corresponding charging on the services used by the user according to the stored correspondence.

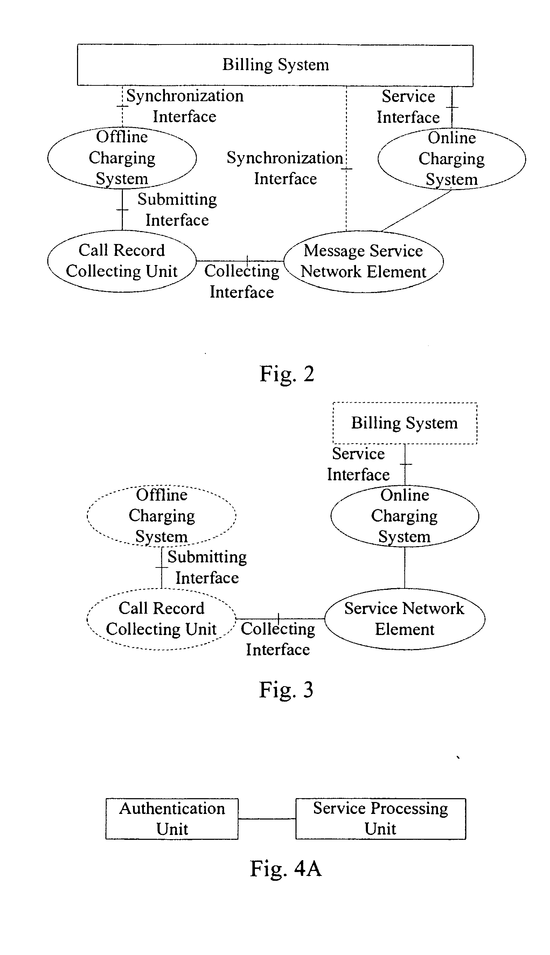

Please refer to Fig. 2, which is an architecture diagram of the charging system in the prior art. In Fig. 2, a billing system synchronizes the correspondence between the subscriber number segments and the payment methods to a message-service NE and an OFCS. For example, message-service NEs such as SMSCs and the OFCS all have the correspondence between the complete subscriber number segments and the payment methods stored. The billing system updates the subscriber numbers stored in the OCS in response to the opening/closing of accounts by the end users making prepayment, i.e., the prepaid subscribers. The end users corresponding to the subscriber numbers stored in the OCS make prepayment.

Upon receiving a service request, the message-service NE determines the number segment which the subscriber number belongs to, and then determines the payment method of the end user according to the correspondence between the stored subscriber number segments and the payment methods. If the end user makes use of post-paid method, that is, the end user is a post-paid subscriber, the message-service NE processes the service request from the end user directly and generates the call records according to the service usage of the end user. If the end user makes use of prepaid method, that is, the end user is a prepaid user, the message-service NE transmits an authentication/charging request to the OCS of the subscriber number segment corresponding to the subscriber number. Upon receiving the authentication/charging request, the OCS such as an IN performs authentication/charging on the prepaid end user and debits the charge for the current service against the account balance of the end user, when there is enough balance in the account of the end user. The OCS then transmits an authentication/charging result to the message-service NE. The message-service NE processes the service request according to the received authentication/charging result. When the service usage is finished, the message-service NE generates the call record according to the service usage. The authentication/charging result may include information about such as whether the authentication and debiting are successful, whether the account is valid, and whether there is enough balance. When the message-service NE processes the service request, no matter the end user makes prepayment or post-payment, it is necessary for the message-service NE to generate the call record so that the subsequent bill check and expense settlement are possible.

Since the charging system may include a plurality of OCSs, the subscriber numbers may be divided into a plurality of number segments, each of the number segments corresponds to one OCS and there is a one-to-one correspondence between the subscriber number segments and the OCSs. The message-service NEs have the correspondence between the subscriber number segments and the OCSs stored. Upon determining that the end user initiating the service request makes use of the prepaid method, the message-service NE determines the OCS corresponding to the subscriber number segment according to the stored correspondence between the subscriber number segments and the OCSs and transmits the authentication/charging request to the OCS.

Generally, a communication system includes a plurality of message-service NEs, thus, a call record collecting unit is used to collect the call records generated by each message-service NE. The call record collecting unit then submits the collected call records to the OFCS. The OFCS identifies the call records of the post-paid end user among the received call records, according to the stored correspondence between the subscriber number segments and the payment methods, and then rates the call records of the post-paid end user and outputs a bill. The end user makes payment for the services according to the bill.

In the prior art, it is necessary for both the message-service NEs and the OFCSs to store the correspondence between the complete subscriber number segments and the payment methods, which means the storage overhead is very large. Though the storage overhead needed for a number segment of continuous numbers, such as a number segment of xxxxxxx0000∼xxxxxxx9999 and a number segment of xxxxxx00000∼xxxxxx99999, is limited, the storage overhead for random numbers is huge, which will inevitably deteriorate the processing performance of the message-service NEs and the OFCS and significantly increase the maintenance cost of the charging system.

Furthermore, in the related processing of the charging procedures, after receiving each service request initiated by the end user at the message-service NEs, it is necessary to determine whether the payment method of the end user is prepayment or post-payment according to the stored correspondence. It is also necessary for the OFCS to identify the call records belonging to the post-paid end users from the received call records, according to the stored correspondence. Such processing significantly increases the burdens of the message-service NEs and the OFCS and severely affects the processing performance of the message-service NEs and the OFCS.

WO 2005/122469 A1 discloses a Flexible charging Mechanism for IP Multimedia services, and a method of processing service related accounting requests at an Online Charging System. The method comprises receiving a service related accounting request from an IP Multimedia Subsystem Serving Element, containing information about chargeable event measuring methods. One of the measuring methods is selected based on a charging model. According to the selected measuring method an accounting response containing the amount of granted service units and identification of the measuring methods is sent to the Service Element.

CN 1859136 A discloses an on-line charging system and off-line charging system interconnected twin-engine structure charging system through shared data centre, which contains on-line charging system, off-line charging system, shared data centre, service bearing network, and business/guest service system. The twin engine structure charging system can complete on-line charging, off-line charging, account sharing, prepaid/after payment switching, and voice service/data service binding etc. functions, providing more flexible charging and control ability.

In summary, in the prior art, when charging processing is performed on the users with random numbers, a lot of system overhead is needed to realize the proper charging of the users. As a result, the charging system in the prior art is of low economical performance.

### SUMMARY

One embodiment of the invention provides a charging processing method, which includes:

requesting, by a service network element (NE), an Online Charging System (OCS) to perform authentication and charging on an end user, upon receiving a service request from the end user; and

receiving information about a payment method of the end user provided by the OCS, the payment method being determined by the OCS according to stored information wherein the payment method is one of prepayment and post-payment.

A charging processing system is provided in one embodiment of the invention. The system includes a service NE and an OCS.

The service NE is adapted to receive a service request from an end user and request the OCS to perform authentication and charging.

The OCS is adapted to receive a request for authentication and charging and determine a payment method of the end user according to stored information and provide the payment method of the end user to the service NE, wherein the payment method is one of prepayment and post-payment.

An online charging processing device is provided in one embodiment of the invention. The device includes a storage unit and an authentication processing unit. The authentication processing unit is adapted to determine a payment method of an end user according to information stored in the storage unit and provide the payment method of the end user to a service NE, wherein the payment method is one of prepayment and post-payment.

In the technical solution provided by an embodiment of the invention, after receiving the service request from the end user, the service NE requests the OCS to perform authentication/charging on the end user. The OCS determines the payment method of the end user according to the stored information and provides the payment method of the end user to the service NE, which saves the service NE from storing the correspondence between the subscriber number segments and the payment methods as required by the prior art and decreases the storage overhead of the service NE. Meanwhile, it is no longer necessary for the service NE to determine whether the payment method of the end user initiating the service request is prepayment or post-payment, which significantly improves the processing performance of the service NE and reduces the maintenance cost of the charging system.

### BRIEF DESCRIPTION OF THE DRAWINGS

Figure 1 is a network architecture diagram illustrating the charging processing for the VASs in the prior art;

Figure 2 is an architecture diagram illustrating the charging system in the prior art;

Figure 3 is an architecture diagram illustrating the charging processing system according to an embodiment of the invention;

Figure 4A is a diagram illustrating a first architecture of the service NE according to an embodiment of the invention;

Figure 4B is a diagram illustrating a second architecture of the service NE according to an embodiment of the invention;

Figure 4C is a diagram illustrating a third architecture of the service NE according to an embodiment of the invention;

Figure 5 is an architecture diagram illustrating the online charging processing device according to an embodiment of the invention;

Figure 6 is a flow chart illustrating the charging processing according to an embodiment of the invention;

Figure 7 is a network architecture diagram illustrating the charging processing for the VASs according to an embodiment of the invention;

Figure 8 is a flow chart illustrating a first embodiment of the charging processing method for the VASs according to an embodiment of the invention;

Figure 9 is a diagram illustrating the message flow between the VAS platform and AC corresponding to Figure 8;

Figure 10 is a flow chart illustrating a second embodiment of the charging processing method for the VASs according to an embodiment of the invention;

Figure 11 is a diagram illustrating the message flow between the VAS platform and AC corresponding to Figure 10; and

Figure 12 is an architecture diagram illustrating the charging system according to the embodiment of the invention.

### DETAILED DESCRIPTION

In one embodiments of the invention, upon receiving a service request from an end user, a service NE requests an OCS to perform authentication/charging on the end user. The OCS determines the payment method of the end user according to stored information and provides the payment method of the end user to the service NE. Furthermore, the service NE processes according to the payment method of the end user provided by the OCS. For example, the service NE adds a payment method indication in a call record generated for the end user according to the payment method of the end user provided by the OCS. The service NE may submit all the generated call records to a call record collecting unit. Upon receiving the call records submitted by the call record collecting unit, the OFCS processes only the call records of the post-paid end user according to the corresponding indications in the call records. The service NE may alternatively submit only the call records of the post-paid end user to the call record collecting unit. Upon receiving the call records submitted by the call record collecting unit, the OFCS processes all the received call records.

Figure 3 is an architecture diagram illustrating the charging processing system according to an embodiment of the invention. As shown in Fig. 3, the charging processing system at least includes a service NE and an OCS. The service NE is adapted to receive a service request from an end user and request the OCS to perform authentication/charging. The OCS is adapted to receive the request for authentication/charging and determine a payment method of the end user according to stored information and provide the payment method of the end user to the service NE. The charging processing system according to one embodiment of the invention may include one or more service NEs. The charging system according to one embodiment of the invention may include a plurality of OCSs. One subscriber number segment corresponds to one OCS, and there is a one-to-one correspondence between the subscriber number segments and the OCSs. The service NE further has the correspondence between the subscriber number segments and the OCSs stored. The service NE determines an OCS corresponding to the subscriber number segment which the subscriber number belongs to according to the correspondence between the subscriber number segments and the OCSs, and requests the OCS to perform the authentication/charging.

When the OCS determines that the payment method of the end user is prepayment, the OCS is further adapted to perform the authentication/charging on the prepaid user and provide an authentication/charging result to the service NE, and debit the charge for the service against the balance of an account of the end user, according to the service usage. The service usage may be determined according to the type of the message-service provided by the service NE when requesting the authentication/charging. It may alternately be provided by the service NE to the OCS when the prepaid user finishes using the service. When the payment method of the end user is prepayment, the service NE is further adapted to process the service request from the prepaid user, according to the authentication/charging result provided by the OCS. When the prepaid user finishes using the service, the service NE generates a call record according to the service usage of the service. When the payment method of the end user is post-payment, the service NE is further adapted to process the service request from the post-paid end user. When the post-paid end user finishes using the service, the service NE generates a call record according to the service usage of the service. No matter the payment method of the end user is prepayment or post-payment, the service NE needs to generate the call record according to the service usage of the service and store the call record for subsequent charging processing, such as bill check, expense settlement. In practical applications, the payment method may be included in the authentication/charging result, no matter the payment method determined by the OCS is prepayment or post-payment. That is, the OCS will set the authentication/charging result of the post-paid end user as failed and have a 'post-payment' indication carried in the authentication/charging result.

The charging processing system based on the service NE and the OCS may further includes a billing system. The billing system is adapted to provide the OCS with subscription information of the end user. The subscription information includes at least the payment method of the end user. The billing system may provide only the subscription information of the prepaid users to the OCS. It may alternatively further provide the subscription information of the post-paid end users to the OCS, while providing the subscription information of the prepaid users to the OCS. The subscription information of the post-paid end users may include only the correspondence between the subscriber number and the post-payment method. Therefore, the OCS may determine whether the payment method of the end user who initiating the service request is prepayment according to the stored information.

The service NE is further adapted to add a payment method indication in the call record generated for the end user according to the payment method of the end user provided by the OCS. Specifically, a post-payment method indication is added to the call record generated for the post-paid end user, or a prepayment method indication is added to the call record generated for the prepaid user, or payment method indications corresponding to the payment methods of the end users are added to the call records generated for all the end users. The charging processing system based on the service NE and the OCS may further include a call record collecting unit and an OFCS. The service NE is further adapted to submit all the generated call records to the call record collecting unit. The call record collecting unit is adapted to submit the collected call records generated by the service NE to the OFCS. The OFCS is adapted to process the call records of the post-paid end user, according to the payment method indication in the received call records. Alternatively, the service NE is further adapted to submit the generated call records of the post-paid end user to the call record collecting unit. The call record collecting unit is adapted to submit the collected call records generated by the service NE to the OFCS. The OFCS is adapted to process all the received call records.

Furthermore, if the call records collected by the call record collecting unit from the service NE do not differ from that of the prior art in any way, that is, the call records collected by the call record collecting unit are the call records generated for all the end users and there are no payment method indications in the call records, the OFCS may at least store the subscriber numbers of the post-paid end users. For example, the OFCS stores the subscriber numbers of the post-paid end users. Alternatively, the OFCS stores the correspondence between all the subscriber numbers and the payment methods. In this case, the OFCS is capable of determining whether the payment method of the end user corresponding to a call record is post-payment according to the stored information.

The charging processing system based on the service NE and the OCS may further includes a billing system, a call record collecting unit and an OFCS. The function of each of them is the same as described above and will not be described in detail here.

The service NE according to one embodiment of the invention at least includes an authentication unit, which is adapted to request the OCS to perform authentication/charging according to the service request from the end user and receive the payment method of the end user provided by the OCS or the payment method of the end user and the result of authentication/charging.

Fig. 4A illustrates a first architecture diagram of the service NE according to one embodiment of the invention. As shown in Fig. 4A, the service NE includes an authentication unit (AU) and a service processing unit. The AU is further adapted to provide the service processing unit with the payment method of the end user, or the payment method of the end user and the result of authentication/charging. The corresponding processing may be performed by a first AU or a second AU included in the AU. If the payment method of the end user is prepayment, the service processing unit is adapted to process the service request from the prepaid user according to the authentication/charging result provided by the AU. When the prepaid user finishes using the service, a call record is generated according to the service usage of the service. For non-message-service which is not charged by number of times, the processing may be performed by an online processing unit included in the service processing unit. The service processing unit is further adapted to submit the service usage to the online charging system. If the payment method of the end user is post-payment, the service processing unit is adapted to process the service request from the post-paid end user. When the post-paid end user finishes using the service, a call record is generated according to the service usage of the service. The processing may be performed by an offline processing unit included in the service processing unit.

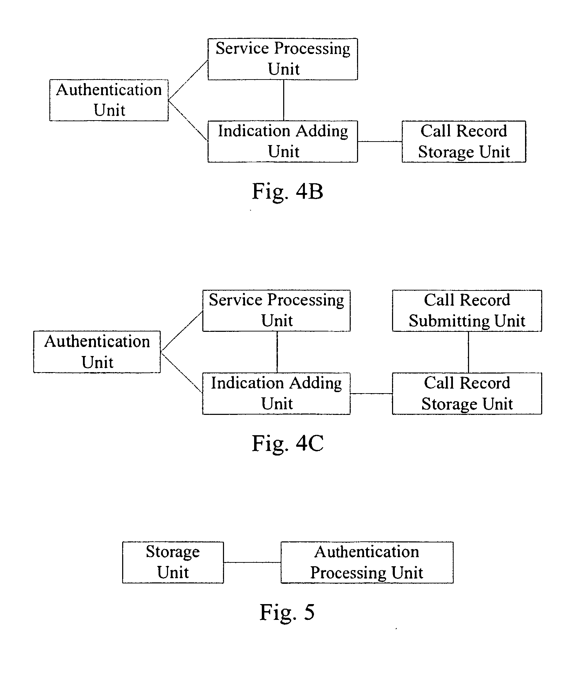

Based on the architecture of the service NE shown in Fig. 4A, the service NE may further include an indication adding unit and a call record storage unit. Fig. 4B illustrates a second architecture diagram of the service NE according to one embodiment of the invention. As shown in Fig. 4B, the AU is further adapted to provide the payment method of the end user to the indication adding unit, which may be performed by an indication unit included in the AU. The service processing unit is further adapted to provide the generated call records to the indication adding unit, which may be performed by a call record transmission unit included in the service processing unit. The indication adding unit is adapted to add a payment method indication in the received call records according to the payment method of the end user provided by the AU and store the call records with the added payment method indication to the call record storage unit. The processing of adding the payment method indication in the call records by indication adding unit specifically involves: a post-payment indication is added to the call record generated for the post-paid end users; alternatively, a prepayment indication is added to the call record generated for the prepaid users; alternatively, a payment method indication corresponding to the payment method of the end user is added to the call records generated for all the end users.

Based on the architecture of the service NE shown in Fig. 4B, the service NE may further include a call record submitting unit. Fig. 4C illustrates a third architecture diagram of the service NE according to one embodiment of the invention. As shown in Fig. 4C, the call record submitting unit is adapted to submit all the call records stored in the call record storage unit or the call records of the post-paid end user to the OFCS/to the call record collecting unit.

Fig. 5 illustrates the architecture diagram of the online charging processing device according to one embodiment of the invention. As shown in Fig. 5, the online charging processing device at least includes a storage unit and an authentication processing unit. The authentication processing unit is adapted to determine the payment method of the end user according to information stored in the storage unit and provide the payment method of the end user to the service NE. When the payment method of the end user is determined to be prepayment, the authentication processing unit is further adapted to perform authentication/charging on the prepaid user and provide the result of authentication/charging to the service NE, which may be performed by a first authentication processing unit included in the authentication processing unit. The online charging processing unit further includes an online charging unit, which is adapted to debit charge for the service against the balance of the account of the prepaid user according to the service usage of the service. The service usage may be determined by the type of the message-service when performing the authentication/charging. It may alternatively be provided by the service NE when the prepaid user finishes using the service.

The offline charging processing device according to one embodiment of the invention at least includes an offline charging processing unit, which is adapted to process the call records of the post-paid end user according to the payment method indication in the received call records; or is adapted to process all the received call records.

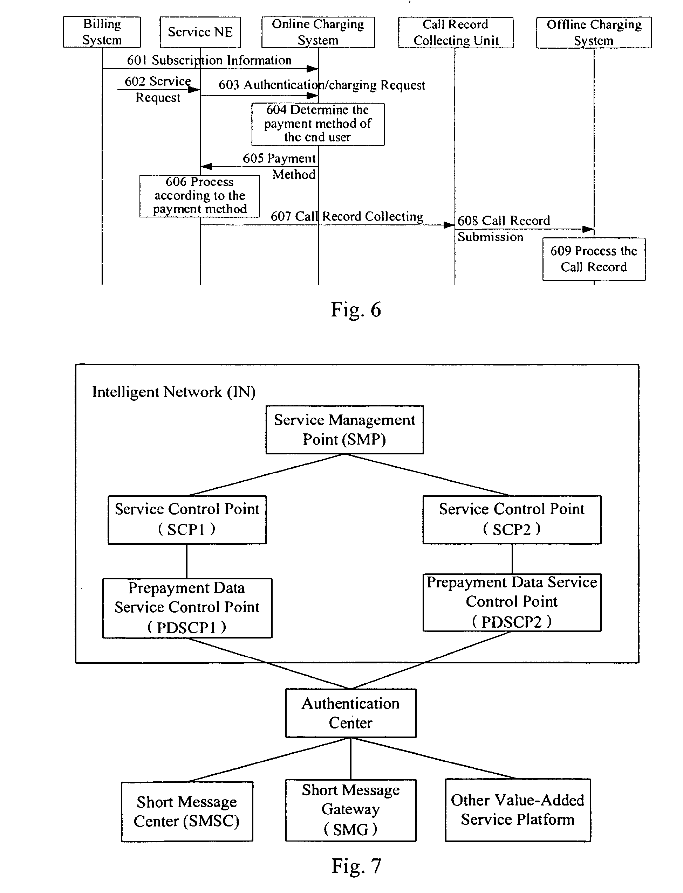

Fig. 6 illustrates a flow chart of the charging processing according to one embodiment of the invention. As shown in Fig. 6, the charging processing according to the embodiment includes the following steps.

Step 601: The billing system provides an OCS with subscription information of an end user, which includes at least the payment method of the end user. The billing system may provide only the subscription information of the prepaid users to the OCS. It may alternatively further provide the subscription information of the post-paid end users to the OCS, while providing the subscription information of the prepaid users to the OCS. The subscription information of the post-paid end users may include only the correspondence between the subscriber number and the post-payment method. The billing system updates the information stored in the OCS by providing the OCS with the subscription information of the end users timely.

Steps 602 to 603: A service NE receives a service request from an end user and transmits an authentication/charging request to the OCS, requesting the OCS to perform authentication/charging on the end user. If there is a plurality of OCSs, the service NE may determine an OCS corresponding to the subscriber number segment which the subscriber number belongs to according to the stored correspondence between the subscriber number segments and the OCSs, and transmits the authentication/charging request to the OCS.

Steps 604 to 605: Upon receiving the authentication/charging request, the OCS determines the payment method of the end user according to the stored information and provides the payment method of the end user to the service NE. When the OCS determines that the payment method of the end user is prepayment, it may further perform authentication/charging on the prepaid user and provide the service NE with the result of authentication/charging. No matter the payment method determined by the OCS is prepayment or post-payment, the payment method may be included in the result of authentication/charging. That is, the OCS will set the authentication/charging result of the post-paid end user as 'failed' and have a 'post-payment' indication carried in result of the authentication/charging.

Step 606: Upon receiving the payment method provided by the OCS, the service NE accordingly processes the service request initiated by the end user. If the payment method of the end user is post-payment, the service NE processes the service request initiated by the post-paid end user. When the post-paid end user finishes using the service, the service NE generates a call record according to the service usage of the service. When the payment method of the end user is prepayment, the service NE processes the service request from the prepaid user according to the authentication/charging result provided by the OCS. When the prepaid user finishes using the service, the service NE generates a call record according to the service usage of the service. The service NE also adds a payment method indication in the call record generated for the end user according to the payment method of the end user provided by the OCS. Specifically, a post-payment indication is added to the call record generated for the post-paid end user, or a prepayment indication is added to the call record generated for the prepaid user, or a payment method indication corresponding to the payment method of the end user is added to the call records generated for all the end users.

After the OCS determines that the payment method of the end user is prepayment, for those services such as message-service which are charged by number of times, it debits the charge for the current service directly against the balance of the account of the end user. In this way, when the prepaid user finishes using the service, it is not necessary for the service NE to submit the usage of the service to the OCS. For other non-message services which are not charged by number of times, e.g., a voice service charged by the call duration and data service charged by data flow. After the OCS determines that the payment method of the end user is prepayment, the service usage of the end user can not be determined; therefore, when the prepaid user finishes using the service, it is necessary for the service NE to submit the service usage to the OCS. The OCS debits the charge for the current service directly against the balance of the account of the prepaid user.

Step 607 to step 609: The service NE submits all the generated call records to the call record collecting unit, which in turn submits the collected call records generated by the service NE to the OFCS. The OFCS processes the call records of the post-paid end user, according to the payment method indication in the received call records. Alternatively, the service NE submits the call records of the post-paid end user to the call record collecting unit, which in turn submits the collected call records generated by the service NE to the OFCS. The OFCS is adapted to process all the received call records.

Furthermore, if the call records collected by the call record collecting unit from the service NE do not differ from that of the prior art in any way, that is, the call records collected by the call record collecting unit are the call records generated for all the end users and there is not payment method indication in the call records, the OFCS may at least store the subscriber number of the post-paid end user. For example, the OFCS has the subscriber number of the post-paid end user stored; alternatively, the OFCS has the correspondence between all the subscriber numbers and the payment methods stored. In this case, the OFCS may determine whether the payment method of an end user corresponding to a call record is post-payment according to the stored information.

In the above descriptions, the OCS may store the correspondence between all the subscriber numbers and the payment methods. In this case, determining the payment method of the end user by the OCS according to the stored information specifically involves that the OCS determines the payment method of the end user according to the stored correspondence. Furthermore, the OCS may alternatively store only the subscriber numbers of the prepaid users. In this case, determining the payment method of the end user by the OCS according to the stored information specifically involves: the OCS determines whether the subscriber number of the end user is stored, if the subscriber number of the end user is stored, it is determined that the payment method of the end user is prepayment; if the subscriber number of the end user is not stored, it is determined that the payment method of the end user is post-payment. Since the subscription condition of the end user may changes, there is a period for the change to take effect, when the end user makes the change between prepayment and post-payment, the OCS may store some redundant data during the period for the change to take effect. For example, the end user corresponding to the subscriber number stored in the OCS has applied for prepayment, but the subscription has not come to effect, or the end user corresponding to the subscriber number stored in the OCS has changed to post-payment. Therefore, after the OCS determines it has the subscriber number of the end user stored, it may proceed to determine whether the stored subscriber number of the end user has a special indication. If there is a special indication, it is determined that the payment method of the end user is post-payment. If there is no special indication, it is determined the payment method of the end user is prepayment. Based on the scenarios described above, determining whether the stored subscriber number of the end user has a special indication may involve: the special indication is used for indicating that the prepayment method of the subscriber number has not come to effect yet, and it is determined whether the stored subscription number of the end user has the special indication. If there is the special indication, it is determined that the payment method of the end user is post-payment. If there is no special indication, it is determined that the payment method of the end user is prepayment. Alternatively, the special indication is used for indicating that the subscriber number has changed from prepayment to post-payment. It is determined whether the subscriber number of the end user has the special indication. If it has the special indication, it is determined that the payment method of the end user is post-payment. If it does not have the special indication, it is determined that the payment method of the end user is prepayment.

The subscriber number may include various identifications to distinguish the users. The technical solution provided by one embodiment of the invention is applicable to various services, such as message service, voice service and data service.

In the following, the technical solution of one embodiment of the invention described in the above will be elaborated with an example, in which the VAS platform is the service NE and the IN is the OCS.

In one embodiment, the OCS includes an AC, which is adapted to determine the payment method of the end user and provide the payment method to the VAS platform.

In one embodiment of the invention, the VAS request is transmitted by the VAS platform to the AC, which is requested to determine the user type corresponding to the VAS request. The AC transmits a response message to the VAS platform, which processes the VAS corresponding to the VAS request, according to the response message from the AC. The user type includes a prepaid user and a post-paid user. As a result, it is no longer necessary for the VAS platform to distinguish prepaid users from post-paid users according to the original number segment configuration. Instead, the newly-added AC in the network is used to correctly distinguish the prepaid users from the post-paid users of the VAS. Therefore, the problem of authentication failure or being unable to charge the VAS used by the user due to change of the payment method of the user will be avoided, which ensures that a better VAS is provided to the user.

Fig. 7 is a network architecture diagram illustrating the charging processing for the VASs used by users according to one embodiment of the invention. The VAS used by the user is assumed to be Short Message Service (SMS), and SMSC and SMG are the VAS platforms for processing the short message VAS. The protocol between the existing VAS platform and the prepayment authentication IN platform is a private protocol provided by the operators. According to one embodiment of the invention, to accommodate the existing network environment, based on the existing VAS platform and prepayment authentication IN platform, the external interface protocol of the AC is configured to support the authentication/debiting protocol of the existing VAS platform when the AC is configured.

To make it possible for the AC to distinguish between the prepaid user and post-paid user, in one embodiment of the invention, prepaid user data is stored at the AC. When the AC receives an authentication request message, it searches for related content in the prepaid user database according to the subscriber number carried in the authentication request message, and determines whether the user is a prepaid user according to the search result.

There are two methods for storing the prepaid user data in the AC.

In the first method, the prepaid user data in the subscription information of the end user provided by the billing system to the IN is synchronized to the AC in real-time. It may include the following three scenarios:

1. When the SMP in the prepayment authentication IN platform opens an account, the SMP in the prepayment authentication IN platform synchronizes the newly-added prepaid user data to the AC.

In this case, if the payment method corresponding to the mobile number is configured as prepayment, then the prepaid user data corresponding to the mobile number is synchronized to the SMP when the SMP opens the account, that is, when the user has not activated the mobile number yet. The user data includes the mobile number and the corresponding home PDSCP and SCP information of the user in the IN.

2. When the SMP in the prepayment authentication IN platform closes an account, the SMP in the prepayment authentication IN platform deletes the prepaid user data from the AC synchronously.

3. When the prepaid user is activated, the SMP in the prepayment authentication IN platform synchronizes the prepaid user data to the AC.

Scenario 3 is in contrast to scenario 1. In scenario 3, the SMP does not synchronize the prepaid user data to the AC when opening the account. Instead, the prepaid user data is synchronized to the AC when the user uses the corresponding mobile number for services.

In the second method, the AC periodically synchronizes the prepaid user data from the prepayment authentication IN platform. The second method differs from the first method in that the prepaid user data in the AC is not synchronized with the prepaid user data in the prepayment authentication IN platform in real-time.

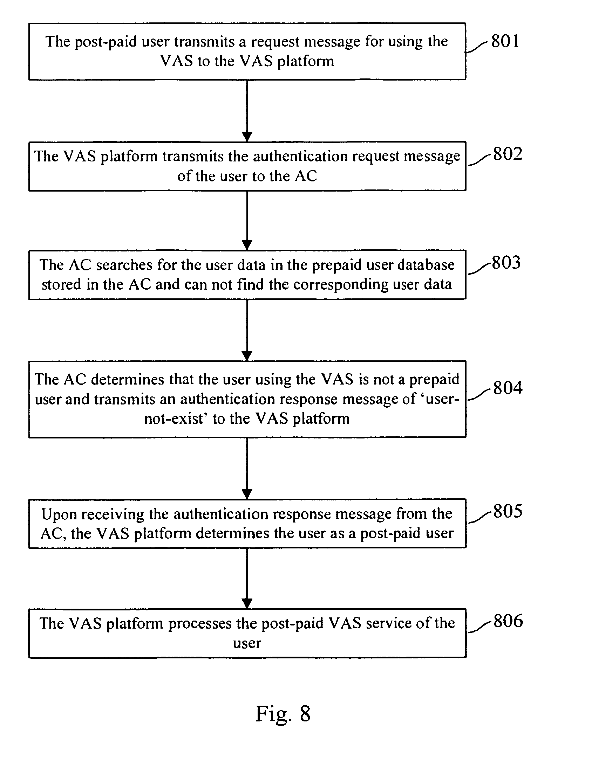

A flow chart illustrating a first embodiment of the charging processing method for the VAS of the invention is shown in Fig. 8, in which the user using the VAS is assumed to be a post-paid user. The flow chart shown in Fig. 8 includes the following steps:

Step 801: The post-paid user transmits a request message for using the VAS to the VAS platform.

The authentication request message carries the mobile number of the user.

Step 802: The VAS platform transmits the authentication request message of the user to the AC.

Step 803: The AC searches for the user data in the prepaid user database stored in the AC and the corresponding user data is not found.

Step 804: The AC determines that the user using the VAS is not a prepaid user and transmits an authentication response message of 'user-not-exist' to the VAS platform.

In this step, the AC transmits the authentication response message of 'user-not-exist' as a response message to the VAS platform.

Step 805: Upon receiving the authentication response message from the AC, the VAS platform determines the user as a post-paid user.

Step 806: The VAS platform processes the post-paid VAS service of the user.

This step involves prior art, that is, the VAS platform records the call records for the VAS usage by the post-paid user according to the existing method for processing post-paid users.

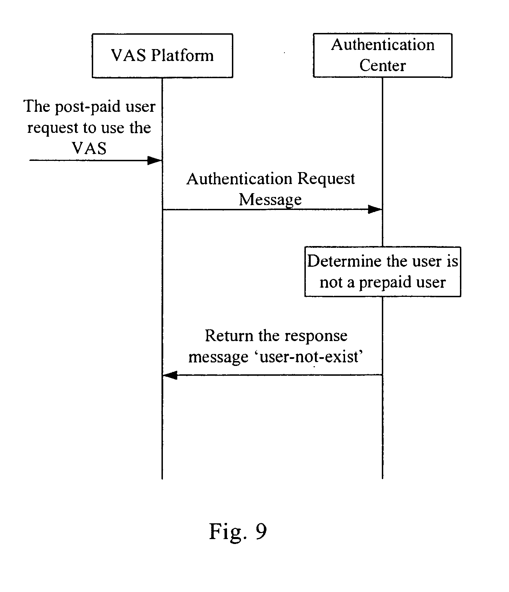

The message flow between the VAS platform and AC corresponding to Fig. 8 is shown in Fig. 9.

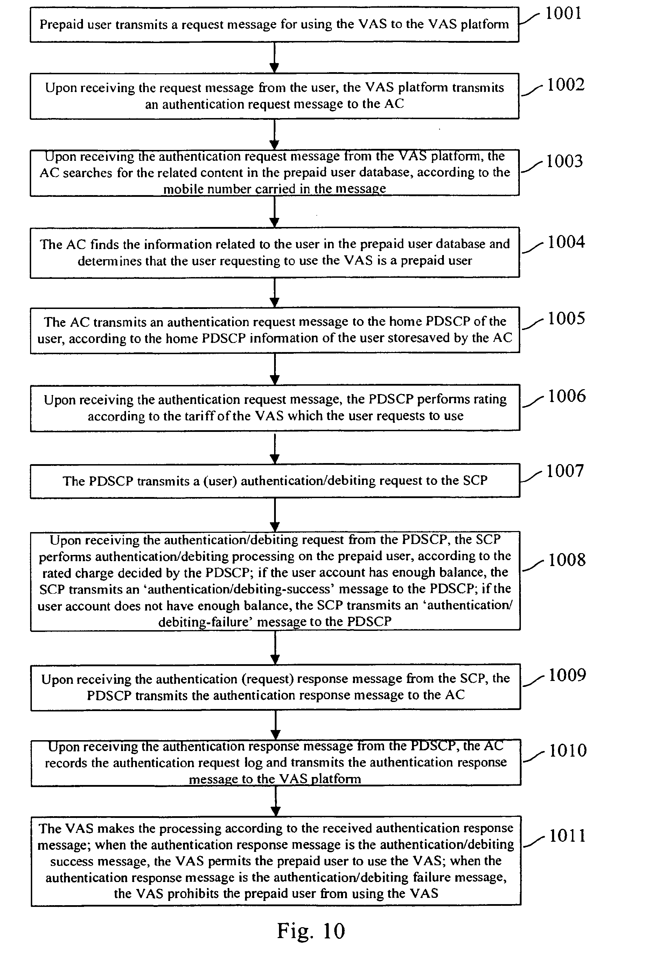

A flow chart illustrating a second embodiment of the charging processing method for the VAS of the invention is shown in Fig. 10, in which the user using the VAS is assumed to be a prepaid user. The flow shown in Fig. 10 includes the following steps.

Step 1001: The prepaid user transmits a request message for using the VAS to the VAS platform.

Step 1002: Upon receiving the request message from the user, the VAS platform transmits an authentication request message to the AC.

Step 1003: Upon receiving the authentication request message from the VAS platform, the AC searches for the related content in the prepaid user database, according to the mobile number carried in the authentication request message.

Step 1004: The AC finds the information related to the user in the prepaid user database and determines that the user requesting to use the VAS is a prepaid user.

Step 1005: The AC transmits an authentication request message to the home PDSCP of the user, according to the home PDSCP information of the user stored by the AC.

Step 1006: Upon receiving the authentication request message, the PDSCP performs rating according to the tariff of the VAS which the user requests to use.

Step 1007: The PDSCP transmits a user authentication/debiting request to the SCP.

Step 1008: Upon receiving the authentication/debiting request from the PDSCP, the SCP performs authentication/debiting on the prepaid user, according to the rated charge decided by the PDSCP. If the user account has enough balance, the SCP transmits an 'authentication/debiting-success' message to the PDSCP. If the user account does not have enough balance, the SCP transmits an 'authentication/debiting-failure' message to the PDSCP.

Steps 1006 to 1008 involve the method for authentication/debiting for the VAS used by the prepaid user in the existing IN.

Step 1009: Upon receiving the authentication response message from the SCP, the PDSCP transmits the authentication response message to the AC.

In this step, the authentication response message includes the 'authentication/debiting-success' message or 'authentication/debiting-failure' message of step 1008.

Step 1010: Upon receiving the authentication response message from the PDSCP, the AC records the authentication request log and transmits the authentication response message to the VAS platform.

In this step, recording the authentication request log is optional. If there is no information related to the user terminal in the reimbursement message, it is necessary to record the authentication request log. The AC transmits to the VAS platform the authentication/debiting result returned from the SCP and forwarded through the PDSCP, i.e., the authentication response message, as the response message.

Step 1011: When the authentication response message is the authentication/debiting success message, the VAS permits the prepaid user to use the VAS. When the authentication response message is the authentication/debiting failure message, the VAS prohibits the prepaid user from using the VAS.

Further explanation on the way of recording the authentication request log by the AC at step 1010 is as follows.

The AC should record the authentication request log returned from the IN platform, which is mainly due to the following consideration: When the prepaid user subscribes to a VAS such as downloading a picture, based on the existing prepayment mechanism, the IN debits the charge for the VAS against the user's account before the user obtains the picture. Then, the user downloads the picture. However, sometimes it is possible that the download may fail while the user has already paid for the VAS. In this case, the VAS platform has to transmit the reimbursement message to the IN and require that the charge prepaid by the user be reimbursed to the user. The reimbursement message transmitted by some VAS platforms does not carry the mobile number of the user and just carries a serial number for processing the VAS of the user instead. Thus, when the IN receives such reimbursement message, it can not decide to which user the charge should be reimbursed just by the serial number. To this end, in the second embodiment of the invention described above, by recording every authentication request log in the AC, the mobile number of the prepaid user who uses the VAS is recorded. As a result, when the prepayment authentication IN processes the reimbursement message, it may learn the mobile number corresponding to the reimbursement message from the AC and then credit the charge prepaid by the user to the user's account.

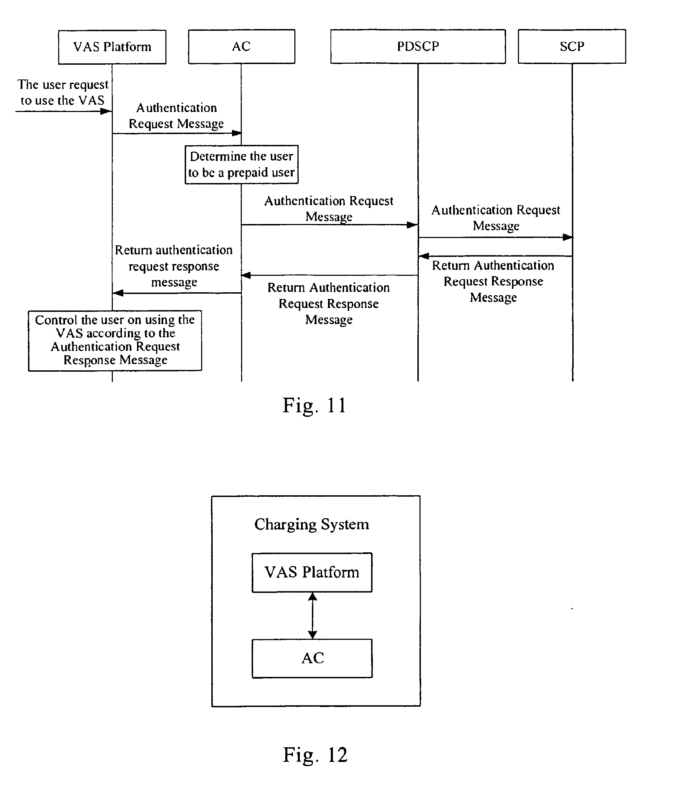

The message flow between the VAS platform and AC corresponding to Fig. 10 is shown in Fig. 11.

Please refer to Fig. 12, which is an architecture diagram illustrating the charging system according to one embodiment of the invention. In the system, the OCS includes an AC and a service NE works as the VAS platform.

The VAS platform is adapted to transmit a VAS request to the AC and request the AC to determine the user type corresponding to the VAS request, and process the VAS request according to a response message from the AC.

The AC is adapted to receive the VAS request from the VAS platform and determine the user type corresponding to the received VAS request, and transmit the corresponding response message to the VAS platform.

An embodiment of the invention also provides a VAS platform, which is applied to a system providing the VAS.

The VAS platform includes a request transmission module and a VAS processing module.

The request transmission module is adapted to transmit the VAS request to the AC and request the AC to determine the user type corresponding to the VAS request.

The VAS processing module is adapted to receive the response message from the AC and process the VAS request according to the response message.

An authentication center includes a request receiving module, a user data storage module, a determination module and a processing module.

The user data storage module is adapted to store the prepaid user data.

The request receiving module is adapted to receive the VAS request from the VAS platform and transmit the VAS request to the determination module.

The determination module is adapted to determine the user type corresponding to the received VAS request, according to the prepaid user data, and get a determination result and have it transmitted to the processing module.

The processing module is adapted to transmit the corresponding response message to the VAS platform according to the determination result.

Please refer to Fig. 7, which is the architecture diagram of the system provided by one embodiment of the invention. The system further includes:
an SCP, which is adapted to receive the authentication/debiting request from the AC and perform the authentication/debiting, and transmit the corresponding authentication/debiting response message to the AC, according to the authentication/debiting processing result.

In one embodiment of the invention, the prepaid user data is stored at the AC, which will determine whether the user using the VAS is a prepaid user. In practical applications, the post-paid user data may alternatively be stored at the AC, which will determine whether the user using the VAS is a post-paid user. Both the methods are essentially the same.

In the technical solutions of performing charging on the VAS provided by one embodiments of the invention, the task of distinguishing the user types originally performed by the VAS platform is transferred to the AC, which transmits the response message to the VAS platform, and the VAS platform in turn processes the VAS requested by the user correspondingly, according to the response message, so that the VAS is provided. Furthermore, the technical solutions of performing charging on the VAS provided by one embodiments of the invention are based on the existing networking environment and do not require the upgrade of the VAS platform and the IN. As a result, it ensures the stability of the existing network devices of the operators and improves the competence of the operators.

In summary, in the technical solutions provided by one embodiment of the present invention, after receiving the service request from the end user, the service NE requests the OCS to perform authentication/charging on the end user. The OCS determines the payment method of the end user according to the stored information and provides the payment method of the end user to the service NE, which saves the service NE from storing the correspondence between the subscriber number segments and the payment methods as required by the prior art and decreases the storage overhead of the service NE. Meanwhile, it is no longer necessary for the service NE to determine whether the payment method of the end user initiating the service request is prepayment or post-payment, which significantly improves the processing performance of the service NE and reduces the maintenance cost of the charging system.

Furthermore, the call records submitted by the service NE to the call record collecting unit have the corresponding payment method indication; alternatively, the call records submitted by the service NE to the call record collecting unit are only the call records of the post-paid end users. As a result, it is no longer necessary for the OFCS to store the correspondence between the subscriber number segments and the payment methods as required by the prior art, which reduces the storage overhead of the OFCS, improves the processing performance of the OFCS and reduces the maintenance cost of the charging system.

In summary, with the technical solutions provided by the embodiments of the invention, it is possible to reduce the system overhead required in the charging processing, to reduce the maintenance cost of the charging system and provide the charging system with better economical performance.

Furthermore, in the technical solutions provided by the embodiments of the invention, it is not needed to configure the correspondence between the subscriber number segments and the payment methods. Thus, an end user may freely set the payment method as he likes with one user number. While in the prior art, an end user must change the user number if he wishes to change the payment method. Thus, the invention provides the user with significant convenience.

It is apparent that those skilled in the art may devise various modifications and variations to the invention without departing from the principles and scope of the invention. Therefore, if these modifications and variations are within the scope of the claims of the invention and its equivalent technology, they are intended to be included in the scope of the disclosure.

## Claims

1. A charging processing method, **characterized in** comprising:
requesting, by a service network element, NE, an Online Charging System, OCS, to perform authentication and charging on an end user, upon receiving a service request from the end user; and
receiving information about a payment method of the end user provided by the OCS, wherein the payment method is determined by the OCS according to stored information,
wherein the payment method is one of prepayment and post-payment.

2. The method of claim 1, wherein the determining of the payment method by the OCS according to stored information comprises:
determining the payment method as prepayment by the OCS according to the stored information;
providing, by the OCS, the payment method of the end user to the service NE via an authentication and charging result, and debiting charge for the service against balance of an account of the prepaid user according to service usage; and
processing, by the service NE, the service request from the prepaid user, when the received payment method of the end user carried in the authentication and charging result is prepayment, and generating a call record according to the service usage of the service, when the end user finishes using the service.

3. The method of claim 2, wherein the service NE comprises a value added service, VAS, platform and the OCS comprises an authentication center, AC, the method further comprises the following step after receiving information about the payment method of the end user determined by the OCS according to the stored information:
for a prepaid user, informing, by the AC, a Service Control Point, SCP, in the OCS to perform authentication and debiting on a VAS used by the user, and transmitting an authentication and debiting response message received from the SCP as the authentication and charging result to the VAS platform.

4. The method of one of the claims 1 to 3, further comprising the following steps after providing information about the payment method of the end user:
processing, by the service NE, the service request from the post-paid end user, according to the payment method of the end user being post-payment carried in the authentication and charging result; and
generating a call record according to the service usage of the service, when the end user finishes using the service.

5. The method of claim 4, wherein the service NE comprises a VAS platform and the OCS comprises an authentication center, the method further comprises the following step after receiving information about the payment method of the end user determined by the OCS according to the stored information:
as for a post-paid user, the authentication and charging result does not carry an authentication result of the end user.

6. The method of any of claims 2 to 5, further comprising the following step after the generating the call record:
adding, by the service NE, a payment method indication in the generated call record according to the received information about payment method of the end user,
submitting, by the service NE, all the call records to an Offline Charging System, OFCS, through a call record collecting unit; and
processing, by the OFCS, the call records of the post-paid end user, according to the payment method indication in the received call records.

7. The method of any of claims 2 to 5, further comprising the following steps after generating the call record:
submitting, by the service NE, call records of the post-paid end user to an OFCS, through a call record collecting unit, and processing, by the OFCS, all the received call records; or
submitting, by the service NE, all the call records to an OFCS, through a call record collecting unit, and processing, by the OFCS, the call records of the post-paid end user according to a stored correspondence between subscriber numbers and payment methods.

8. The method of any of claims 1 to 7, further comprising:
providing, by a billing system, subscription information of the end user to the OCS, wherein the subscription information at least comprises the payment method of the end user; and
storing, by the OCS, the received subscription information.

9. The method of any of claims 1 to 8, wherein when a charging system includes a plurality of OCSs, the method further comprises the following step before the step of requesting the OCS to perform authentication and charging on the end user:
determining, by the service NE, an OCS corresponding to a number segment which the subscriber number belongs to, according to a stored correspondence between subscriber number segments and the OCSs.

10. The method of any of claims 1 to 9, wherein the determining of the payment method by the OCS according to the stored information comprises:
determining, by the OCS, the payment method of the end user, according to a stored correspondence between subscriber numbers and payment methods; or
determining whether a subscriber number of the end user is stored, if the subscriber number of the end user is stored, determining the payment method of the end user as prepayment; if the subscriber number of the end user is not stored, determining the payment method of the end user as post-payment.

11. The method of any of claims 1 to 10, wherein the determining of the payment method being determined by the OCS according to the stored information comprises:
determining whether a stored subscriber number of the end user has an indication showing that an application for prepayment method of the subscriber number has not come to effect, if the stored subscriber number of the end user has an indication showing that the application for prepayment method of the subscriber number has not come to effect, determining the payment method of the end user as post-payment; if the stored subscriber number of the end user has an indication showing that the application for prepayment method of the subscriber number has come to effect, determining the payment method of the end user as prepayment.

12. A charging processing system, **characterized in** comprising a service NE and an OCS, wherein,
the service NE is adapted to receive a service request from an end user and request the OCS to perform authentication and charging;
the OCS is adapted to receive a request for authentication and charging and determine a payment method of the end user according to stored information and provide the payment method of the end user to the service NE,
wherein the payment method is one of prepayment and post-payment.

13. The system of claim 12, wherein,
the OCS is further adapted to perform authentication and charging on a prepaid user and provide the authentication and charging result to the service NE, and debit charge for the service against balance of an account of the prepaid user, according to the service usage, wherein the payment method of the end user carried in the authentication and charging result is prepayment;
the service NE is further adapted to process the service request from the end user, according to the payment method of the end user carried in the authentication and charging result being prepayment, and generate a call record according to service usage of the service when the end user finishes using the service.

14. An online charging processing device, **characterized in** comprising a storage unit and an authentication processing unit, wherein the authentication processing unit is adapted to perfom authentication and charging on an end user, determine a payment method of the end user according to information stored in the storage unit and provide the payment method of the end user to a service NE, wherein the payment method is one of prepayment and post-payment.

15. The device of claim 14, wherein,
the authentication processing unit further comprises a first authentication processing unit, which is adapted to perform authentication and charging on a prepaid user and provide the authentication and charging result to the service NE, and the payment method of the end user is carried in the authentication and charging result.

## Patentansprüche

1. Vergebührungsverarbeitungsverfahren, **gekennzeichnet durch** die folgenden Schritte:
Anfordern von einem Online-Vergebührungssystem OCS, Authentifikation und Vergebührung an einem Endbenutzer durchzuführen, **durch** ein Dienstnetzwerkelement NE beim Empfang einer Dienstanforderung von dem Endbenutzer; und
Empfangen von Informationen über ein Bezahlungsverfahren des Endbenutzers, das durch das OCS bereitgestellt wird, wobei das Bezahlungsverfahren **durch** das OCS gemäß gespeicherten Informationen bestimmt wird,
wobei das Bezahlungsverfahren Vorbezahlung oder Nachbezahlung ist.

2. Verfahren nach Anspruch 1, wobei das Bestimmen des Bezahlungsverfahrens durch das OCS gemäß gespeicherten Informationen Folgendes umfasst:
Bestimmen des Bezahlungsverfahrens als Vorbezahlung durch das OCS gemäß den gespeicherten Informationen;
Bereitstellen des Bezahlungsverfahrens des Endbenutzers für das Dienst-NE durch das OCS über ein Authentifikations- und Vergebührungsergebnis und Abbuchen der Gebühr für den Dienst von dem Kontostand eines Kontos des Vorbezahlungs-Benutzers gemäß Dienstbenutzung; und
Verarbeiten der Dienstanforderung von dem Vorbezahlungs-Benutzer durch das Dienst-NE, wenn das in dem Authentifikations- und Vergebührungsergebnis geführte empfangene Bezahlungsverfahren des Endbenutzers Vorbezahlung ist, und Erzeugen eines Gebührendatensatzes gemäß der Dienstbenutzung des Dienstes, wenn der Endbenutzer die Verwendung des Dienstes beendet.

3. Verfahren nach Anspruch 2, wobei das Dienst-NE eine Plattform für Mehrwertdienst VAS umfasst und das OCS eine Authentifikationszentrale AC umfasst, wobei das Verfahren nach dem Empfangen von Informationen über das Bezahlungsverfahren des Endbenutzers, das durch das OCS gemäß den gespeicherten Informationen bestimmt wird, ferner den folgenden Schritt umfasst:
für einen Vorbezahlungs-Benutzer: Informieren eines Dienststeuerpunkts SCP in dem OCS durch die AC, Authentifikation und Abbuchung an einem von dem Benutzer verwendeten VAS durchzuführen, und Senden einer von dem SCP empfangenen Authentifikations- und Abbuchungsantwortnachricht als das Authentifikations- und Vergebührungsergebnis zu der VAS-Plattform.

4. Verfahren nach einem der Ansprüche 1 bis 3, das nach dem Bereitstellen von Informationen über das Bezahlungsverfahren des Endbenutzers ferner die folgenden Schritte umfasst:
Verarbeiten der Dienstanforderung von dem Nachbezahlungs-Endbenutzer gemäß dem in dem Authentifikations- und Vergebührungsergebnis geführten Bezahlungsverfahren des Endbenutzers, das Nachbezahlung ist, durch das Dienst-NE; und
Erzeugen eines Gebührendatensatzes gemäß der Dienstbenutzung des Dienstes, wenn der Endbenutzer die Verwendung des Dienstes beendet.

5. Verfahren nach Anspruch 4, wobei das Dienst-NE eine VAS-Plattform umfasst und das OCS eine Authentifikationszentrale umfasst, wobei das Verfahren ferner nach dem Empfangen von Informationen über das Bezahlungsverfahren des Endbenutzers, das durch das OCS gemäß den gespeicherten Informationen bestimmt wird, den folgenden Schritt umfasst:
bei einem Nachbezahlungs-Benutzer führt das Authentifikations- und Vergebührungsergebnis kein Authentifikationsergebnis des Endbenutzers.

6. Verfahren nach einem der Ansprüche 2 bis 5, das nach dem Erzeugen des Gebührendatensatzes ferner die folgenden Schritte umfasst:
Hinzufügen einer Indikation des Bezahlungsverfahrens durch das Dienst-NE in dem erzeugten Gebührendatensatz gemäß den empfangenen Informationen über das Bezahlungsverfahren des Endbenutzers,
Übergeben aller Gebührendatensätze durch das Dienst-NE an ein Offline-Vergebührungssystem OFCS durch eine Gebührendatensatz-Sammeleinheit; und
Verarbeiten der Gebührendatensätze des Nachbezahlungs-Endbenutzers durch das OFCS gemäß der Indikation des Bezahlungsverfahrens in den empfangenen Gebührendatensätzen.

7. Verfahren nach einem der Ansprüche 2 bis 5, das ferner nach dem Erzeugen des Gebührendatensatzes die folgenden Schritte umfasst:
Übergeben von Gebührendatensätzen des Nachbezahlungs-Endbenutzers durch das Dienst-NE an ein OFCS durch eine Gebührendatensatz-Sammeleinheit und Verarbeiten aller empfangenen Gebührendatensätze durch das OFCS; oder
Übergeben aller Gebührendatensätze an ein OFCS durch das Dienst-NE durch eine Gebührendatensatz-Sammeleinheit und Verarbeiten der Gebührendatensätze des Nachbezahlungs-Endbenutzers durch das OFCS gemäß einer gespeicherten Korrespondenz zwischen Teilnehmernummern und Bezahlungsverfahren.

8. Verfahren nach einem der Ansprüche 1 bis 7, ferner mit den folgenden Schritten:
Bereitstellen von Subskriptionsinformationen des Endbenutzers für das OCS durch ein Abrechnungssystem, wobei die Subskriptionsinformationen mindestens das Bezahlungsverfahren des Endbenutzers umfassen; und
Speichern der empfangenen Subskriptionsinformationen durch das OCS.

9. Verfahren nach einem der Ansprüche 1 bis 8, wobei, wenn ein Vergebührungssystem mehrere OCS enthält, das Verfahren ferner vor dem Schritt des Anforderns von dem OCS, Authentifikation und Vergebührung an dem Endbenutzer durchzuführen, den folgenden Schritt umfasst:
Bestimmen eines OCS, das einem Nummernsegment entspricht, zu dem die Teilnehmernummer gehört, durch das Dienst-NE gemäß einer gespeicherten Korrespondenz zwischen Teilnehmernummernsegmenten und den OCS.

10. Verfahren nach einem der Ansprüche 1 bis 9, wobei das Bestimmen des Bezahlungsverfahrens durch das OCS gemäß den gespeicherten Informationen Folgendes umfasst:
Bestimmen des Bezahlungsverfahrens des Endbenutzers durch das OCS gemäß einer gespeicherten Korrespondenz zwischen Teilnehmernummern und Bezahlungsverfahren; oder
Bestimmen, ob eine Teilnehmernummer des Endbenutzers gespeichert ist; wenn die Teilnehmernummer des Endbenutzers gespeichert ist, Bestimmen des Bezahlungsverfahrens des Endbenutzers als Vorbezahlung; wenn die Teilnehmernummer des Endbenutzers nicht gespeichert ist, Bestimmen des Bezahlungsverfahrens des Endbenutzers als Nachbezahlung.

11. Verfahren nach einem der Ansprüche 1 bis 10, wobei das Bestimmen des Bezahlungsverfahrens, das durch das OCS gemäß den gespeicherten Informationen bestimmt wird, Folgendes umfasst:
Bestimmen, ob eine gespeicherte Teilnehmernummer des Endbenutzers eine Indikation aufweist, die zeigt, dass eine Anwendung für das Vorbezahlungsverfahren der Teilnehmernummer nicht wirksam geworden ist; wenn die gespeicherte Teilnehmernummer des Endbenutzers eine Indikation aufweist, die zeigt, dass die Anwendung für das Vorbezahlungsverfahren der Teilnehmernummer nicht wirksam geworden ist, Bestimmen des Bezahlungsverfahrens des Endbenutzers als Nachbezahlung; wenn die gespeicherte Teilnehmernummer des Endbenutzers eine Indikation aufweist, die zeigt, dass die Anwendung für das Vorbezahlungsverfahren der Teilnehmernummer wirksam geworden ist, Bestimmen des Bezahlungsverfahrens des Endbenutzers als Vorbezahlung.

12. Vergebührungsverarbeitungssystem, **dadurch gekennzeichnet, dass** es ein Dienst-NE und ein OCS umfasst, wobei
das Dienst-NE dafür ausgelegt ist, eine Dienstanforderung von einem Endbenutzer zu empfangen und von dem OCS anzufordern, Authentifikation und Vergebührung durchzuführen;
das OCS dafür ausgelegt ist, eine Authentifikations- und Vergebührungsanforderung zu empfangen und gemäß gespeicherten Informationen ein Bezahlungsverfahren des Endbenutzers zu bestimmen und das Bezahlungsverfahren des Endbenutzers dem Dienst-NE bereitzustellen,
wobei das Bezahlungsverfahren Vorbezahlung oder Nachbezahlung ist.

13. System nach Anspruch 12, wobei
das OCS ferner dafür ausgelegt ist, Authentifikation und Vergebührung an einem Vorbezahlungs-Benutzer durchzuführen und das Authentifikations- und Vergebührungsergebnis dem Dienst-NE bereitzustellen und die Gebühr für den Dienst von dem Kontostand eines Kontos des Vorbezahlungs-Benutzers gemäß der Dienstbenutzung abzubuchen, wobei das in dem Authentifikations- und Vergebührungsergebnis geführte Bezahlungsverfahren des Endbenutzers Vorbezahlung ist;
das Dienst-NE ferner dafür ausgelegt ist, die Dienstanforderung von dem Endbenutzer gemäß dem in dem Authentifikations- und Vergebührungsergebnis geführten Bezahlungsverfahren des Endbenutzers, das Vorbezahlung ist, zu verarbeiten und gemäß der Dienstbenutzung des Dienstes einen Gebührendatensatz zu erzeugen, wenn der Endbenutzer die Verwendung des Dienstes beendet.

14. Online-Vergebührungsverarbeitungseinrichtung, **dadurch gekennzeichnet, dass** sie eine Speichereinheit und eine Authentifikationsverarbeitungseinheit umfasst, wobei die Authentifikationsverarbeitungseinheit dafür ausgelegt ist, Authentifikation und Vergebührung an einem Endbenutzer durchzuführen, ein Bezahlungsverfahren des Endbenutzers gemäß in der Speichereinheit gespeicherten Informationen zu bestimmen und das Bezahlungsverfahren des Endbenutzers einem Dienst-NE bereitzustellen, wobei das Bezahlungsverfahren Vorbezahlung oder Nachbezahlung ist.

15. Einrichtung nach Anspruch 14, wobei
die Authentifikationsverarbeitungseinheit ferner eine erste Authentifikationsverarbeitungseinheit umfasst, die dafür ausgelegt ist, Authentifikation und Vergebührung an einem Vorbezahlungs-Benutzer durchzuführen und das Authentifikations- und Vergebührungsergebnis dem Dienst-NE bereitzustellen, und das Bezahlungsverfahren des Endbenutzers in dem Authentifikations- und Vergebührungsergebnis geführt wird.

## Revendications

1. Procédé de traitement de facturation, **caractérisé en ce qu'**il comprend :
la demande, par un élément de réseau de service, NE, à un Système de Facturation en Ligne, OCS, d'effectuer l'authentification et la facturation d'un utilisateur final, à la réception d'une demande de service par l'utilisateur final ; et
la réception d'informations sur un procédé de paiement de l'utilisateur final fournies par l'OCS, le procédé de paiement étant déterminé par l'OCS en fonction d'informations mémorisées,
le procédé de paiement étant l'un d'un paiement anticipé et d'un paiement différé.

2. Procédé selon la revendication 1, dans lequel la détermination du procédé de paiement par l'OCS en fonction d'informations mémorisées comprend :
la détermination par l'OCS du procédé de paiement comme étant un paiement anticipé en fonction des informations mémorisées ;
la fourniture, par l'OCS, du procédé de paiement de l'utilisateur final au NE de service par l'intermédiaire d'un résultat d'authentification et de facturation, et le débit du coût du service sur un solde d'un compte de l'utilisateur à paiement anticipé en fonction de l'utilisation du service ; et
le traitement, par le NE de service, de la demande de service par l'utilisateur à paiement anticipé, quand le procédé de paiement reçu de l'utilisateur final porté dans le résultat d'authentification et de facturation est un paiement anticipé, et la génération d'un enregistrement d'appel en fonction de l'utilisation du service quand l'utilisateur final arrête d'utiliser le service.

3. Procédé selon la revendication 2, dans lequel le NE de service comprend une plate-forme de service à valeur ajoutée, VAS, et l'OCS comprend un centre d'authentification, AC, le procédé comprenant en outre, après la réception des informations sur le procédé de paiement de l'utilisateur final déterminé par l'OCS en fonction des informations mémorisées, l'étape suivante :
pour un utilisateur à paiement anticipé, l'instruction, par l'AC, à un Point de Commande de Service, SCP, dans l'OCS, d'effectuer une authentification et un débit sur un VAS utilisé par l'utilisateur, et la transmission d'un message de réponse d'authentification et de débit reçu depuis le SCP comme résultat d'authentification et de facturation à la plate-forme VAS.

4. Procédé selon l'une quelconque des revendications 1 à 3, comprenant en outre, après la fourniture d'informations sur le procédé de paiement de l'utilisateur final, les étapes suivantes :
le traitement, par le NE de service, de la demande de service par l'utilisateur final à paiement différé, en fonction du procédé de paiement de l'utilisateur final déterminé comme un paiement différé porté dans le résultat d'authentification et de facturation ; et
la génération d'un enregistrement d'appel en fonction de l'utilisation du service, quand l'utilisateur final arrête d'utiliser le service.

5. Procédé selon la revendication 4, dans lequel le NE de service comprend une plate-forme VAS et l'OCS comprend un centre d'authentification, le procédé comprenant en outre, après la réception des informations sur le procédé de paiement de l'utilisateur final déterminé par l'OCS en fonction des informations mémorisées, l'étape suivante :
comme pour un utilisateur à paiement différé, le résultat d'authentification et de facturation ne porte pas de résultat d'authentification de l'utilisateur final.

6. Procédé selon l'une quelconque des revendications 2 à 5, comprenant en outre, après la génération de l'enregistrement d'appel, les étapes suivantes :
l'ajout, par le NE de service, d'une indication de procédé de paiement dans l'enregistrement d'appel généré en fonction des informations reçues sur le procédé de paiement de l'utilisateur final,
la soumission, par le NE de service, de tous les enregistrements d'appel à un Système de Facturation Hors Ligne, OFCS, par le biais d'une unité de collecte d'enregistrements d'appel ; et
le traitement, par l'OFCS, des enregistrements d'appel de l'utilisateur final à paiement différé, en fonction de l'indication de procédé de paiement contenue dans les enregistrements d'appel reçus.

7. Procédé selon l'une quelconque des revendications 2 à 5, comprenant en outre, après la génération de l'enregistrement d'appel, les étapes suivantes :
la soumission, par le NE de service, des enregistrements d'appel de l'utilisateur final à paiement différé à un OFCS, par le biais d'une unité de collecte d'enregistrements d'appel, et le traitement, par l'OFCS, de tous les enregistrements d'appel reçus ; ou
la soumission, par le NE de service, de tous les enregistrements d'appel à un OFCS, par le biais d'une unité de collecte d'enregistrements d'appel, et le traitement, par l'OFCS, des enregistrements d'appel de l'utilisateur final à paiement différé en fonction d'une correspondance mémorisée entre les numéros d'abonnés et les procédés de paiement.

8. Procédé selon l'une quelconque des revendications 1 à 7, comprenant en outre :
la fourniture, par un système de facturation, d'informations d'abonnement de l'utilisateur final à l'OCS, les informations d'abonnement comprenant au moins le procédé de paiement de l'utilisateur final ; et
la mémorisation, par l'OCS, des informations d'abonnement reçues.

9. Procédé selon l'une quelconque des revendications 1 à 8, dans lequel quand un système de facturation comporte une pluralité d'OCS, le procédé comprend en outre, avant l'étape de demande à l'OCS d'effectuer l'authentification et la facturation de l'utilisateur final, l'étape suivante :
la détermination, par le NE de service, d'un OCS correspondant à un segment numéroté auquel appartient le numéro d'abonné, en fonction d'une correspondance mémorisée entre les segments numérotés d'abonnés, et les OCS.

10. Procédé selon l'une quelconque des revendications 1 à 9, dans lequel la détermination du procédé de paiement par l'OCS en fonction des informations mémorisées comprend :
la détermination, par l'OCS, du procédé de paiement de l'utilisateur final, en fonction d'une correspondance mémorisée entre les numéros d'abonnés et les procédés de paiement ; ou
la détermination si un numéro d'abonné de l'utilisateur final est mémorisé ou non, si le numéro d'abonné de l'utilisateur final est mémorisé, la détermination du procédé de paiement de l'utilisateur final comme étant un paiement anticipé ; si le numéro d'abonné de l'utilisateur final n'est pas mémorisé, la détermination du procédé de paiement de l'utilisateur final comme étant un paiement différé.

11. Procédé selon l'une quelconque des revendications 1 à 10, dans lequel la détermination du procédé de paiement par l'OCS en fonction des informations mémorisées comprend :
la détermination si un numéro d'abonné mémorisé de l'utilisateur final comporte ou non une indication montrant qu'un procédé de paiement anticipé du numéro d'abonné n'a pas été appliqué, si le numéro d'abonné mémorisé de l'utilisateur final comporte une indication montrant que le procédé de paiement anticipé du numéro d'abonné n'a pas été appliqué, la détermination du procédé de paiement de l'utilisateur final comme étant un paiement différé ; si le numéro d'abonné mémorisé de l'utilisateur final comporte une indication montrant que le procédé de paiement anticipé de l'abonné a été appliqué, la détermination du procédé de paiement de l'utilisateur final comme étant un paiement anticipé.

12. Système de traitement de facturation, **caractérisé en ce qu'**il comprend un NE de service et un OCS, dans lequel
le NE de service est adapté pour recevoir une demande de service par un utilisateur final et demander à l'OCS d'effectuer une authentification et une facturation ;
l'OCS est adapté pour recevoir une demande d'authentification et de facturation et déterminer un procédé de paiement de l'utilisateur final en fonction d'informations mémorisées et fournir le procédé de paiement de l'utilisateur final au NE de service, dans lequel le procédé de paiement est l'un d'un paiement anticipé et d'un paiement différé.

13. Système selon la revendication 12, dans lequel
l'OCS est adapté en outre pour effectuer l'authentification et la facturation d'un utilisateur à paiement anticipé et fournir le résultat d'authentification et de facturation au NE de service, et débiter le coût du service sur un solde d'un compte de l'utilisateur à paiement anticipé, en fonction de l'utilisation du service, le procédé de paiement de l'utilisateur final porté dans le résultat d'authentification et de facturation étant un paiement anticipé ;
le NE de service est adapté en outre pour traiter la demande de service par l'utilisateur final, quand le procédé de paiement de l'utilisateur final porté dans le résultat d'authentification et de facturation est un paiement anticipé, et générer un enregistrement d'appel en fonction de l'utilisation du service quand l'utilisateur final arrête d'utiliser le service.

14. Dispositif de traitement de facturation en ligne, **caractérisé en ce qu'**il comprend une unité de mémorisation et une unité de traitement d'authentification, dans lequel l'unité de traitement d'authentification est adaptée pour effectuer l'authentification et la facturation d'un utilisateur final, déterminer un procédé de paiement de l'utilisateur final en fonction des informations mémorisées dans l'unité de mémorisation et fournir le procédé de paiement de l'utilisateur final à un NE de service, le procédé de paiement étant l'un d'un paiement anticipé et d'un paiement différé.

15. Dispositif selon la revendication 14, dans lequel
l'unité de traitement d'authentification comprend une première unité de traitement d'authentification, laquelle est adaptée pour effectuer l'authentification et la facturation d'un utilisateur final à paiement anticipé et fournir le résultat d'authentification et de facturation au NE de service, et le procédé de paiement de l'utilisateur final est porté dans le résultat d'authentification et de facturation.
